# EUROPEAN PATENT SPECIFICATION

(11) **EP 3 198 372 B1**
(45) Date of publication and mention of the grant of the patent: **27.02.2019**
(21) Application number: 15766503.5
(22) Date of filing: 22.09.2015
(51) Int. Cl.: G06F 3/01, H05B 37/02

(54) **CONTROL OF LIGHTING**
BELEUCHTUNGSSTEUERUNG
COMMANDE D'ÉCLAIRAGE

(30) Priority: 25.09.2014 EP 14186316
(43) Date of publication of application: 02.08.2017
(73) Proprietor: Philips Lighting Holding B.V., 5656 AE Eindhoven (NL)
(72) Inventor: LAWRENSON, Matthew John, 5656 AE Eindhoven (NL); NOLAN, Julian Charles, 5656 AE Eindhoven (NL); VAN EEUWIJK, Alexander Henricus Waltherus, 5656 AE Eindhoven (NL); VANDEN WYNGAERT, Hilbrand, 5656 AE Eindhoven (NL); VAN DE LAARSCHOT, Huon Urbald Ogier Norbert, 5656 AE Eindhoven (NL)
(74) Representative: Verweij, Petronella Daniëlle
(86) International application number: PCT/EP2015/071624
(87) International publication number: WO 2016/046139

(56) References cited:
- JP-A- H06 323 832
- US-A1- 2011 234 386
- KO NISHINO ET AL: "Corneal Imaging System: Environment from Eyes", INTERNATIONAL JOURNAL OF COMPUTER VISION, KLUWER ACADEMIC PUBLISHERS, BO, vol. 70, no. 1, 1 April 2006 (2006-04-01), pages 23-40, XP019410115, ISSN: 1573-1405, DOI: 10.1007/S11263-006-6274-9

## Description

### TECHNICAL FIELD

The present disclosure relates to techniques for controlling one or more controllable devices such as lighting devices, and particularly to identifying which devices are to be controlled.

### BACKGROUND

A number of techniques exist by which a user can control one or more lighting devices such as the luminaires illuminating a room or other environment, e.g. in order to switch the lights on and off, dim the light level up and down, set a color setting of the emitted light, or request status information from a lighting device.

One technique is to use an application running on a user terminal such as a smartphone, tablet, or laptop or desktop computer. A wired or wireless communication channel is provided between the user terminal and a controller of the lighting device(s), typically an RF channel such as a Wi-Fi, ZigBee or Bluetooth channel in the case of a mobile user terminal. The application is configured to use this channel to send lighting control requests to the controller, based on user inputs entered into the application running on the user terminal. However, for this to work, it must also be determined which lighting device or devices the user is to control. One possibility is that the user simply selects the desired lighting device(s) from a list presented by the application, but this is not very user friendly. In another example, the application is able to use an inbuilt camera of the user terminal (e.g. rear-facing smartphone camera) to detect coded light signals embedded into the light emitted by the lighting devices (i.e. modulated into the light at a frequency high enough to be substantially imperceptible to humans). Based on this technology, each of the lighting devices in the system in question is arranged to emit light embedded with a different respective ID (e.g. different code or modulation frequency) that is unique within the system. The user can then point the camera towards the lighting device(s) or scene he or she wishes to control, and the application automatically determines the identity of the relevant lighting devices based on the embedded IDs detected in light captured by the camera. This may be more user-friendly than selecting from a list, but nonetheless, it may still be awkward, disruptive or unnatural for the user in that it still requires the user to perform an explicit action (holding up the camera) that he she would not have performed otherwise. Also, in some scenarios, it may be desirable to control or at least select the lighting devices without the need for a user terminal at all.

Another technique for controlling lighting devices is gesture control. In a system employing gesture control, the system is provided with suitable sensor equipment such as a 2D video camera, a stereo video camera, a depth-aware (ranging) video camera (e.g. time-of-flight camera), an infrared or ultrasound based sensing device, or a wearable sensor device (e.g. a garment or accessory incorporating one or more accelerometers and/or gyro sensors). A gesture recognition algorithm running on the lighting controller receives the input from the sensor equipment, and based on this acts to recognize predetermined gestures performed by the user and map these to lighting control requests. This is more natural for the user, but it still remains to determine which lighting device or devices the user is to control. One proposed idea is to use image recognition to try to determine which direction the user's face or body is facing relative to the lighting devices. Eye-tracking or gaze-tracking can be used in this respect to determine in which direction a user is looking. However, this may not always give the best indication of the user's intention.

JP H06 323832 A discloses an interface for a vehicle which can measure the watching direction of a spectacled driver accurately even in a free space where the position of the eyeball is not restricted.

### SUMMARY

It would be desirable to find an alternative technology for identifying one or more lighting devices to be controlled by a user.

Corneal imaging is a newly emerging technology in which a high resolution picture of a person is captured by a camera, and the reflection seen in that person's eye or eyes is extracted in order to determine what is in the field of view. The inventors have identified that this (known) technology has an application to lighting control, particularly for identifying which lighting device or devise should be controlled when a user performs a user input (e.g. gestures to turn the lights on or off, or dim the lights up or down).

Hence according to one aspect disclosed herein, there is provided a controller for controlling an arrangement of one or more controllable lighting devices, the controller being configured to perform operations of: receiving an indication of a manual user input performed by a user; receiving image data representing a corneal image, captured by a camera, formed by light reflected into the camera from at least a portion of at least one cornea of the user; identifying based on the light from said controllable lighting devices, one or more of the controllable lighting devices based on the corneal image; and controlling the illumination of the one or more identified lighting devices in response to the manual user input. According to further aspects disclosed herein, are provided a corresponding system, method, and a computer-program product.

The corneal imaging may be used to determine which lighting device or devices (if any) are within the complete corneal image, which lighting devices (if any) are in the user's field of view (FoV) within the corneal image, and/or which lighting devices (if any) the user is directly looking at (center of corneal image). Optionally the corneal image can also expose which lighting devices (if any) are providing indirect light reflected from an object (e.g. a wall in the user's field of view) and as such indirectly reaches this person's eyes. In the field of eye-tracking and gaze-tracking an image of an eye is used to determine relative position of an eye, for example to a user's head to determine if someone is looking to the left or the right; or relative to a user's surroundings to determine what area in the user's surroundings the user is looking at. One would need a map of the user's surroundings to determine what object a user is looking at using these technologies. Furthermore, it is the detection of the position of the center of the user's eye, i.e. the pupil, that determines the user's gaze. This is different from corneal imaging, where identifying the one or more the controllable devices is based on the appearance of these devices directly in the corneal image or their indirect contribution to the light forming the corneal image.

Hence in embodiments, the controller may be configured such that said identification comprises identifying one or more of the controllable lighting devices appear directly in the corneal image; and said control comprises, in response to the manual user input, controlling those of the controllable lighting devices identified as directly appearing in said corneal image. Alternatively or additionally, the controller may be configured such that said identification comprises identifying one or more of the controllable lighting devices which indirectly contribute to the light forming the corneal image; and said control comprises, in response to the manual user input, controlling those of the controllable lighting devices identified as indirectly contributing to said light.

In embodiments, the controller may be configured to determine a field of view of the user within the corneal image; said identification may comprise identifying one or more of the controllable lighting devices which appear inside the user's field of view, and/or which contribute to the light within the field of view; and said control may comprise, in response to the manual user input, controlling those of the controllable lighting devices identified as appearing inside the field of view and/or contributing to the light inside the field of view. In some embodiments, the controller may be configured such that said identification comprises identifying one or more of the controllable lighting devices which appear inside the central region, and/or which contribute to the light inside the central region; and said control comprises, in response to the manual user input, controlling those of the lighting devices identified as appearing inside the central region and/or contributing to the light inside the central region. Alternatively or additionally, the controller may be configured such that said identification comprises identifying one or more of the controllable lighting devices which appear in the peripheral region, and/or which contribute to the light in the peripheral region; and said control comprises, in response to the manual user input, controlling those of the lighting devices identified as appearing in the peripheral region and/or contributing to the light inside the peripheral region.

In embodiments, the controller may be configured such that said control comprises adapting the control of the one or more identified lighting devices in dependence on one or more of: (a) whether identified as directly appearing in the corneal image or contributing indirectly to the light forming the corneal image; (b) whether identified as appearing inside or outside the user's field of view; (c) whether identified as contributing to the light inside or outside the user's field of view; (d) whether identified as appearing in the central region or peripheral region of the user's field of view; and/or (e) whether identified as contributing to the light in the central region or peripheral region of the user's field of view.

In embodiments, said control may comprise setting a light emission of the one or more identified lighting devices to an updated setting, with the new setting is determined based on the manual user input. Alternatively the controller may be configured to determine the updated setting automatically, but triggered in response to the manual user input. For example, said determination may be based on a measure of contrast in the corneal image.

The lighting devices in the corneal image can be identified either based on the light emitted (e.g. using coded light or the color of the light) or the position of the lighting device (e.g. in relation to the camera capturing the image which would also be visible in the corneal image). Based on this identification step the controller allows the user to control the relevant lighting device(s).

Control of the lighting devices can be implemented using any means, such as a traditional user interface (e.g. on a smartphone), gesture control (which can use the same imaging system; using the image of the person or the corneal image), etc.

Furthermore, the technique of associating a manual user input with the illumination emitted by a device identified from a corneal image, and any embodiments thereof disclosed herein, could be extended to identifying and controlling other kinds of controllable devices, not just lighting devices. For instance, the techniques disclosed herein could alternatively or additionally be applied in relation to the illumination emitted by one or more other kinds of appliance such as one or more air conditioning units, heaters, televisions, set-top boxes, games consoles, DVD players, cookers, microwave ovens, fridges, freezers, and/or toasters, etc.

### BRIEF DESCRIPTION OF THE DRAWINGS

To assist understanding of the present disclosure and to show how embodiments may be put into effect, reference is made by way of example to the accompanying drawings in which:
Fig. 1 is a schematic diagram of an environment including a lighting system and user,
Fig. 2 is a schematic diagram of a user's eye including corneal reflections of lamps, and
Fig. 3 is a flow chart of a method of manually controlling lighting devices.

### DETAILED DESCRIPTION OF EMBODIMENTS

Imaging has evolved over the past decades, with higher and higher resolution sensors becoming available. For instance, some modern smartphones now offer resolutions of over 40 megapixels together with sophisticated lens systems. Increasing pixel resolutions helps enable corneal imaging, which requires high pixel resolution due to the target image being reflected from only the small area of the cornea - often from a distance. Corneal imaging has been documented by Columbia University and others. See for example:

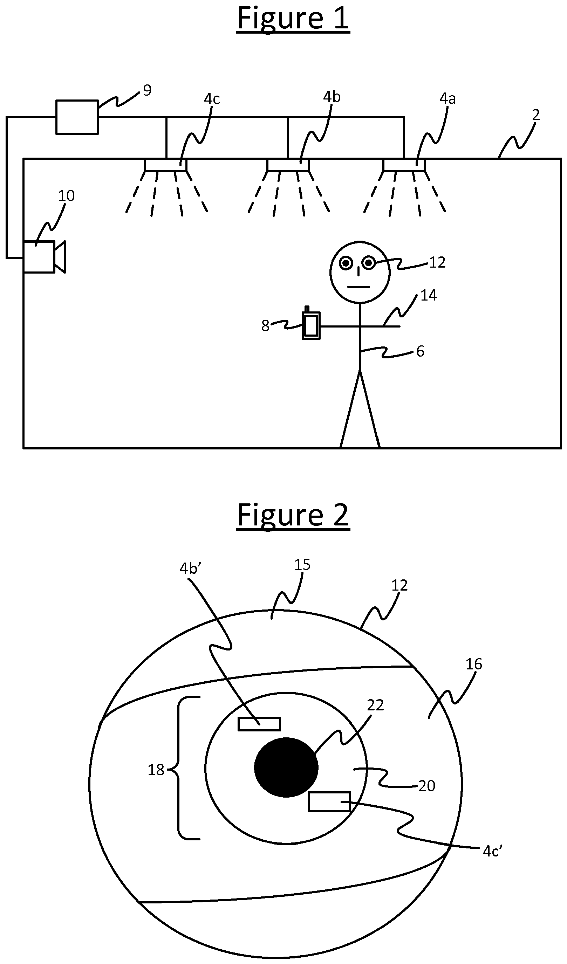

"Corneal Imaging System: Environment from Eyes"; KO NISHINO, Department of Computer Science, Drexel University, 3141 Chestnut Street, Philadelphia, PA 19104; and SHREE K. NAYAR, Department of Computer Science, Columbia University, 1214 Amsterdam Avenue MC 0401, New York, NY 10027; Published April 2006; Springer Science + Business Media, Inc.; International Journal of Computer Vision 70(1), 23-40, 2006; DOI 10.1007/s11263-006-6274-9. E.g. Figures 1, 15, 17, 18 and 19 of this citation give an idea of the level detail that can now be captured from the cornea using modern techniques.

See also: "Eyes for Relighting", Ko Nishino and Shree K Nayer, Department of Computer Science, Columbia University, 2004, ACM 0730-0301/04/0800-0704.

Corneal imaging in turn enables a number of product opportunities across different market sectors including, as recognised herein, lighting control.

Accordingly, the following discloses a controller, system, computer-program and method for controlling a lighting system based on all or part of the image of a scene reflected in the cornea or corneas of one or more users. Such functionality is obtained by imaging the cornea of a user using a high resolution camera such that the reflected scene is obtained.

Lighting devices in the reflected scene (e.g. luminaires or individual lamps) are then identified , including ascertaining a unique identifier of each of these lighting devices such that they may be later addressed and their control settings changed.

A new light setting in the reflected scene may be the result of a new setting requested by the user. Such a setting may, for example, be requested through (i) the use of gestures, e.g. which are either captured by an independent gesture recognition system , or through an imaging system which determines the reflected image of the gestures in the user's cornea; or (ii) the use of a graphical user interface (GUI) on a smartphone or other device. Alternatively the new light setting may be automatically derived, for example based on the contrast present in the scene, which may then adapt the lighting devices until the contrast (and hence glare) falls below a characterized level.

For multiple users, an arbitration algorithm may be used to adapt the settings of each lamp such that the preference of each user is considered in the light setting.

Generally the whole corneal image is not actually seen by the user, i.e. the cornea reflects more than is projected through the pupil onto the user's retina. Hence in embodiments, the field of view for the one or more users may be computed, such that lighting devices are controlled differently when in the field of view than when outside. In some embodiments, the image falling in the central region of the user's field of view may be computed (to determine what the user is looking at), and the lighting devices controlled different when inside the central region than when in the periphery of the user's vision.

When automatically adapting the contrast in a scene, the contrast of the image in a scene is computed, and lighting devices which fall outside of a defined maximum contrast ratio identified. A new illumination setting may then be computed for the outlying lighting devices such that the overall contrast ratio of the scene is reduced.

Figure 1 illustrates an example lighting system in accordance with embodiments of the present disclosure. The system is installed or disposed in an environment 2, e.g. an interior space of a building comprising one or more rooms and/or corridors, or an outdoor space such as a garden or park, or a partially covered space such as a gazebo, or indeed other any other space such as the interior of a vehicle. The system comprises a controller 9 and one or more controllable lighting devices 4 coupled to the controller 9 via a wireless and/or wired connection, via which the controller 9 can control the lighting devices 4. Three lighting devices 4a, 4b and 4c are illustrated in Figure 1 by way of example, but it will be appreciated that in other embodiments the system may comprise other numbers of lighting devices 4 under control of the controller 9, from a single lighting device up to tens, hundreds or even thousands. In embodiments, each of the lighting devices 4 represents a different luminaire for illuminating the environment 2, or a different individually controllable light source (lamp) of a luminaire, each light source comprising one or more lighting elements such as LEDs (a luminaire is the light fixture including light source(s) and any associated housing and/or socket - in many cases there is one light source per luminaire, but it is not excluded that a given luminaire could comprise multiple independently controllable light sources). For example each luminaire or light source 4 may comprise an array of LEDs, a filament bulb, or a gas discharge lamp.

The controller 9 represents a functional element that may be implemented in the form of one or more physical controller units at one or more physical locations. For example, the controller 9 may be implemented as a single central controller connected to the light sources 4 via a lighting network, or may be implemented as a distributed controller, e.g. in the form of a separate controller unit integrated into each of the lighting devices 4. The controller 9 could be implemented locally in the environment 2, or remotely, e.g. from a server communicating with the lighting devices 4 via a network such as the Internet, or any combination of these. Further, the controller 9 may be implemented in software, dedicated hardware circuitry, or configurable or reconfigurable circuitry such as a PGA or FPGA, or any combination of such means. In the case of software, this takes the form of code stored on one or more computer-readable storage media and arranged for execution on one or more processors of the controller 9. For example the computer-readable storage may take the form of e.g. a magnetic medium such as a hard disk, or an electronic medium such as an EEPROM or "flash" memory, or an optical medium such as a CD-ROM, or any combination of such media.

The system further comprises a high resolution camera 10 coupled to the controller 9 via a local or remote wired and/or wireless connection. This camera 10 may be a stand-alone device, or integrated into another product such as mobile device or television. Either way, it is positioned at a suitable location and orientation to capture at least one picture of the environment 2 such that, when a (human) user 6 is present, at least a part of at least one eye 12 of the user 6 is visible in the picture; and particularly, such that the picture includes an image of at least a part of at least one cornea 18 of the user 6. In embodiments multiple such cameras may be used to cover a wider environment, but by way of example the following will be described in relation to one camera 10.

Figure 2 gives a simplified illustration of the human eye 12. The eye 12 comprises the sclera (white of the eye) 16, the iris 20, the pupil 22 and the cornea 18. The eye 12 may be partially covered by the eyelids 15. The cornea 18 is the transparent part of the eye covering the iris 20 and pupil 22 (and the anterior chamber, not shown, which sits in front of the iris 20 and pupil 22 but behind the cornea 18). The cornea 18 is an optical component of the eye 12 which, in part, is responsible for refracting light through the pupil 22 in order to form an image on the retina of the eye (not shown). The cornea 18 is also highly reflective. Note that the cornea 18 does not extend over the sclera 16, which is not as reflective. The sclera 16 is separated from (and attached to) the sclera 16 by the limbus.

As will be exemplified in more detail shortly, the camera 10 is used by the controller 9 to perform imaging of the cornea 18 such that the scene reflected from the cornea 18 is obtained. With a high enough resolution camera 10 for the circumstance (e.g. given the distance from the camera 10 to the user 6, and angle of the user's cornea 18 relative to the camera 10), the detail of individual objects in the scene can be resolved - e.g. see again the publications by Nishino and Nayer cited above. Hence if one or more of the lighting devices 4 are within the solid angle reflected by the cornea 18, these will be visible in the corneal image. By way of example, Figure 2 shows reflections 4b' and 4c' of two of the lighting devices 4b and 4c respectively reflected from the cornea 18.

Thus from the corneal image, the controller 9 is able to estimate which of the lighting devices 4 (if any) are present in the corneal image, and/or which of the lighting devices 4 are present in the user's field of view within the corneal image, the user's central region of vision, and/or the user's peripheral vision. In embodiments, the contrast of the image is computed, and lighting devices 4 which fall within the scene are identified and characterized. This will be discussed in more detail below.

Referring again to Figure 1, the system further comprises at least one user interface for receiving a manual input from the user 6. A manual input is an input performed explicitly by the user, i.e. deliberately in order to request a chosen operation. Furthermore, a manual input as referred to herein refers to an input performed by the user through a faculty other than mere direction of the cornea, detected by means other than the corneal imaging.

For example, in embodiments the user 6 is in possession a user terminal 8 such as a smartphone, tablet or laptop or desktop computer which is installed with a lighting control application, and which has available a suitable wired or wireless channel such as an RF channel (e.g. Wi-Fi, ZigBee or Bluetooth) for communicating with the controller 9. The application enables the user 6 to enter one or more lighting control requests through a manual user interface of the user device 8 (e.g. a GUI such as a touch screen interface), in response to which the requests are communicated to the controller 9.

As another example, the user interface may employ a gesture control. In this case, the user is able to submit one or more lighting control requests by gesturing with one or more of his or her bodily members 14. The gestures may be detected via the same camera 10 as used for the corneal imaging 10 (from the corneal image or the moving picture of the environment 2 more widely), or via a separate sensor device (e.g. separate time-of-flight camera, stereo camera, infrared or ultrasound sensor, or wearable device).

By whatever means the user interface is implemented, it can be used to control the settings of the identified lighting devices 4 either using an absolute or relative measure, across either all or part of the corneal reflection in a static or dynamic image. In embodiments, the lighting control requests by the user may explicitly specify the new setting or change in setting desired by the user. Alternatively an automatic measure, such as the contrast within the reflected scene, can be used to automatically determine the settings for the identified lamps either using an absolute or relative measure across either all or part of the corneal reflection in a static or dynamic image. In this case the lighting control request by the user triggers the new setting or the change, but the value of the new setting or the degree of the change is determined automatically by the controller 9.

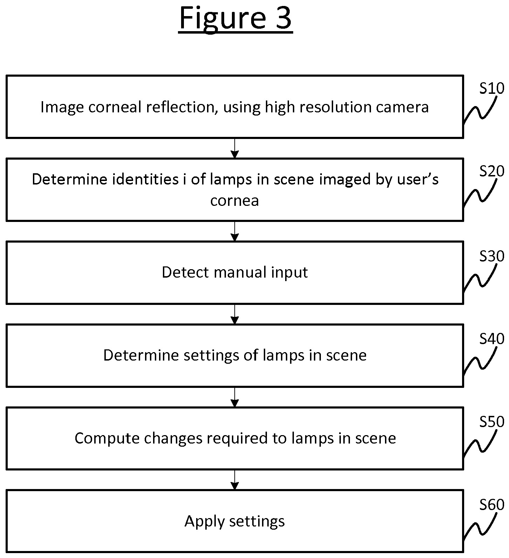

The operation of the controller 9 is now discussed in more detail in relation to the flow chart of Figure 3.

At step S10, the controller 9 images the corneal reflection from the cornea 18 of the user 6, using the high resolution camera 10. The controller 9 tracks the cornea 18, and computes the scene which is being reflected in the image of the cornea 18, e.g. using the techniques disclosed by Nishino and Nayer.

At step S20, the controller 9 determines which of the one or more lighting devices 4 are present in the scene imaged by the user's cornea 18. In embodiments where the system comprises only one lighting device 4, this amounts to determining whether or not that lighting device is present. In embodiments where the system comprises multiple lighting devices 4, this amounts to identifying which amongst the multiple lighting devices 4 is present. The lighting devices present in the reflected scene are determined by processing the image (using, for example, the relative changes in intensity across the scene), and are identified so they can be individually addressed. This may be achieved in a number of ways.

For example, in embodiments the lighting devices 4 may be identified based on coded light. In this case, each of the lighting devices 4 is configured to emit its respective light modulated (in embodiments at frequency beyond human perception) with a different respective embedded ID that is unique amongst the others in the system, e.g. each modulated with a different modulation frequency, or a different digital code. This frequency or code can then be detected from the reflection 4b' 4c' of each lighting device 4b, 4c present in the corneal image (in embodiments over multiple frames). The coded light signal may be demodulated by the controller 9, or by an embedded coded light function in the camera 10.

In another example, the lighting devices 4b, 4c in the corneal image may be identified through the positions of the lighting devices 4 in the corneal image. E.g. given the known geometry of the human cornea 18, the controller 9 can calculate the location or orientation of the lighting devices 4b, 4c appearing in the corneal image relative to the user 6, and/or relative to the camera 10 which may also appear reflected in the corneal image. Given knowledge of the "absolute" location or orientation of the user 6 and/or camera 10 (i.e. relative to the environment 2 or some other known frame of reference), the controller 9 can then calculate the absolute location or orientation of the lighting devices 4. Given a database or table mapping IDs of the lighting devices 4 to their absolute positions, the controller 9 can then determine the identity of the reflected devices 4b, 4c.

In further examples, the lighting devices 4b, 4c in the corneal image may be identified through distinct characteristics of the lighting devices 4 (e.g. unique color spectrum, intensity etc.), or, or by polling individual lamps (perhaps imperceptibly) using the controller 9.

Note, according to Nishino and Nayar, the "corneal field of view" (i.e. the complete corneal image consisting of everything reflected by the cornea 18) is always greater than the user's field of view (the part of the corneal image projected onto the retina). I.e. not everything reflected by the cornea 18 is refracted through the pupil 22. Nishino and Nayar therefore provide an algorithm for computing the user's field of view (FoV) from the corneal image.

Accordingly, in embodiments of the present disclosure, the controller 9 may be configured to process the corneal image to identify which of the lighting devices 4 (if any) appears specifically in the user's FoV, either instead of or in addition to identifying which appear in the corneal image more generally. For instance the condition for being identified for control may be specifically that the lighting device 4 is inside the FoV, not just inside the corneal image; or alternatively the manner in which the identified devices are controlled may be dependent on whether identified as in the FoV or just in the corneal image but outside the FoV (e.g. the user input affects those in the FoV more strongly than those that are just in the corneal image but not the FoV).

Furthermore, note that the human field of view consists of a central region and peripheral vision, being distinct in that they have different densities of photoreceptors in the corresponding regions of the retina. Different biological definitions are possible, e.g. the central region may correspond to the macula or fovea - the macular or foveal region of retina - while the peripheral region may correspond to the rest of the retina. Accordingly, in embodiments of the present disclosure, the controller 9 may be configured to process the corneal image to identify which of the lighting devices 4 (if any) appears specifically in the user's central vision region, and/or which specifically appear in the peripheral vision region. For instance the condition for being identified for control may be specifically that the lighting device 4 is inside the central region of the user's FoV, not just in the user's peripheral vision; or alternatively the manner in which the identified devices 4 are controlled may be dependent on whether identified as in the central region of the FoV or just in the peripheral region of the FoV (e.g. the user input affects those in the central region more strongly than those that are just in the peripheral region).

Anywhere in this description that describes identifying which lighting devices 4 are present or appear in the corneal image, or the like, this may alternatively or additionally apply to determining whether present or appearing in the portion of the corneal image corresponding to the user's field of view (FoV), the central region of user's FoV, and/or the peripheral vision region of the user's FoV.

Further, in embodiments, the controller 9 may use the corneal image to identify not just which of the lighting devices 4 appear directly in the corneal image, FoV, central region and/or peripheral vision; but also which of the lighting devices 4 indirectly contribute to the light that is reflected from the cornea 18 into the camera 10. Indirect here means the lighting device 4 itself is behind the user 6 and outside the solid angle covered by the cornea 18, but some light from that device 4 still arrives via reflection (e.g. diffuse reflection) from some other, additional surface such as a white wall prior to the reflection from the cornea 18. For example, in the case where the lighting devices 4 are identified by the coded light they emit, or by characteristics such as spectrum, this information may still be detectable from the indirect light.

Anywhere in this description that describes identifying which lighting devices 4 are present or appear (i.e. directly appear) in the corneal image, FoV, central vision region or peripheral vision region, or the like, this may alternatively or additionally apply to identifying which lighting devices 4 contribute light into the corneal image, FoV, central vision region and/or peripheral vision region.

Note that the act of identifying lighting devices 4 which are in the corneal image comprises both identifying the fact that those one or more lighting devices 4 are in the corneal image, and determining their identity. Similarly, the act of identifying lighting devices 4 which are in a certain region such as the FoV, central vision region or peripheral vision region comprises both identifying the fact that those one or more lighting devices 4 are in the specific region in question, and determining their identity.

Note also, the condition for a lighting device 4 being identified as in or inside the FoV, central region or peripheral region could be that it appears wholly inside the FoV, central region or peripheral region (in which case the device 4 is considered outside if any of it is outside); or alternatively the condition for being identified as in or inside the FoV, central region or peripheral region could be that at least a part of the lighting device 4 appears inside the FoV, central region or peripheral region respectively (in which case it is considered outside only wholly outside). As another alternative, the manner in which the identified devices are controlled may be dependent on whether identified as a wholly inside the FoV or region, wholly outside, or overlapping.

Whatever the criterion or criteria for being identified, each of the identified lighting devices 4 in the corneal image, FoV, central region and/or peripheral vision area is then tagged with its associated settings (which may be determined from the lighting controller 9, or estimated through the image of the scene including the lighting device 4).

At step S30, the controller 9 detects a manual input. As discussed, the manual input can come from a user device 8 such as a smart phone (in some embodiments this may even be the same device comprising the camera 10 used to image the user's cornea). The user interface may use a touchscreen based GUI, gesture recognition interface or other interface types. E.g. the manual input may be in the form of a slider control for brightness (for example) an on/off switch for automatic contrast control and may relate to one or multiple lamps within the corneal image or a subset of this.

At step S40, the controller 9 determines the current settings of each of the identified lighting devices 4 in the reflected scene, either directly by retrieving the settings from memory or reading them from the lighting devices 4, or indirectly by estimating the setting from the captured image.

At step S50, the controller 9 computes changes required to the lighting identified lighting devices 4 in the reflected scene. In embodiments, this depends on the status of the manual input, and whether a manual or automatic change has been specified. If a manual change is specified, in this instance the manual input controls which the user interacts with are used to determine an absolute or relative change to the light settings. If an automatic change is specified, in this instance the manual controls are used to define that an automatic change will occur, and the new setting for the lamps is computed automatically - for example to limit the maximum contrast visible in the cornea of the user.

At step S60, the controller 9 applies the settings by loading the new lighting settings to the relevant lighting devices 4.

Note that in embodiments, steps S40 and S50 are not necessarily required. Alternatively, instead of specifying a change in the setting(s), the user input or controller 9 may instead specify an absolute setting. For example instead of the user requesting a certain increase or decrease in the light level (e.g. increase or decrease of X%), the user may request that the light level is set to a certain absolute level (e.g. Y% of maximum).

Note also, as mentioned previously, the control may depend on where the one or more lighting devices are identified. For example, the effect of the user input or the automatically determined degree of change may be different depending on whether lighting devices 4 are identified as being outside the corneal image or inside, and/or may be different depending on whether identified as being inside or outside the user's FoV, and/or may be different depending on whether identified as being inside or outside the user's central region of vision (e.g. falling within the fovea or macula). For instance, if the user requests a 20% increase in the light level, the controller 9 may increase the light from any devices 4 in the corneal image by the requested 20%, while increasing the light any other, indirectly contributing devices 4 by a lesser amount, say 10%. Or the controller 9 may increase the light from any devices 4 inside the FoV by the requested 20%, while increasing any the light from any other devices 4 inside the corneal image but outside the FoV by a lesser amount, say 10%, and not affecting any other devices at all, or perhaps only increasing the light from any indirectly contributing devices 4 by an even lesser amount, say 5%. As another example, the controller 9 may increase the light from any devices inside the central region of the user's vision by the requested 20%, while increasing the light from any devices in the peripheral region by a lesser amount, say 10%, and not affecting any other devices at all, or perhaps only increasing those outside the peripheral region but inside the corneal image and/or indirectly contributing to the light by a still lesser amount, say 5%, or 5% and 2.5% respectively.

For multiple users, an arbitration algorithm may be used to adapt the settings of each lamp such that the preference of each user is considered in the setting of the lighting device(s) 4. Hence in embodiments, the controller 9 may be configured to identify one or more of the controllable lighting devices 4 based on a corneal image of a plurality of users, to receive an indication of a manual user input from each of said plurality of users, and to perform an arbitration to control those of the controllable lighting devices identified based on the corneal images of the plurality of users in dependence on the manual user inputs from the plurality of users.

For example, such an arbitration algorithm may be configured to perform the arbitration based on any one or more of the following rules. In embodiment, the arbitration algorithm may determine whether there are matching preferences for the different users. For example there are two users, each of them prefers a dim level of 40%, and so this is the dim level that is set. In embodiments, the arbitration algorithm may determine whether there are overlapping preference ranges for the different users. For example there are three users, the first user prefers a dim level between 30% and 60%, the second user prefers a dim level between 40% and 80%, and the third user prefers a dim level between 50% and a 100%, and so a dim level is selected within the overlapping range of 50% to 60% - e.g. the selection of the dim level within this range may be based on the average dim level preference over all three users. In further embodiments, the algorithm may mediate between divergent user preferences. For example a first user prefers a dim level between 20%-50% and a second user prefers a dim level between 70% and 100%, and the dim level that is set is halfway between the upper bound of the first user and the lower bound of the second user. In further embodiments, the algorithm may request user feedback to solve differences between preferences, e.g. request users to adapt their preferences. In yet further embodiments, the algorithm may prioritize user preferences based on ranking, e.g. a user that is in his home location has preferences over a user that is a guest at that location. These are merely some examples. The user preferences can relate to dim level, light color, area to be lighted, etc.

It will be appreciated that the above embodiments have been described only by way of example.

For instance, while the above has been described in terms of lighting devices such as luminaires for illuminating a room or other environment, the techniques disclosed herein may be extended to identifying and controlling other types of device from the corneal image. For example, the one or more controllable devices being identified and controlled based on the corneal image could be other types of user appliances such as: HVAC appliances (heating, ventilation and/or air conditioning); media appliances (e.g. TVs, set-top boxes, games consoles, DVD players, and/or stereos); and/or kitchen appliances or "white goods" (e.g. cookers, microwaves and fridges). In such cases, the device may be identified from the light from a screen or indicator light of the device; or the device may be identified from light it contributes indirectly into the corneal image, e.g. the light from its screen or indicator light being reflected. For instance, a DVD player may have an LED which emits coded light, or a TV may be identified by image analysis, etc. If there are multiple devices in the corneal image, then the position of the device in the image may be used (or gaze tracking and such) to determine which one the user is looking at (i.e. which device is to be controlled).

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored and/or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A controller (9) for controlling an arrangement of one or more luminaires which emit light for illuminating an environment (4a, 4b, 4c), the controller being configured to perform operations of:
receiving an indication of a manual user input performed by a user (6);
receiving a corneal image, captured by a camera (10), formed by light reflected into the camera from at least a portion of at least one cornea (18) of the user;
identifying, based on the light from said luminaires, those of the one or more of the luminaires (4a, 4b, 4c) which either appear directly in the corneal image or indirectly contribute to the light forming the corneal image; and
controlling the illumination of the one or more identified luminaires in response to the manual user input.

2. The controller of claim 1, wherein:
said identifying comprises identifying those of the one or more of the luminaires (4a, 4b, 4c) which appear directly in the corneal image; and
said control comprises, in response to the manual user input, controlling those of the luminaires identified as directly appearing in said corneal image.

3. The controller of claim 1 or 2, wherein:
said identifying comprises identifying those of the one or more of the luminaires (4a, 4b, 4c) which indirectly contribute to the light forming the corneal image; and
said control comprises, in response to the manual user input, controlling those of the luminaires identified as indirectly contributing to said light.

4. The controller of any preceding claim, wherein:
the controller (9) is configured to determine a field of view of the user within the corneal image;
said identifying comprises identifying those of the one or more of the luminaires (4a, 4b, 4c) which appear inside the user's field of view, and/or which contribute to the light within the field of view; and
said control comprises, in response to the manual user input, controlling those of the luminaires identified as appearing inside the field of view and/or contributing to the light inside the field of view.

5. The controller of claim 4, wherein:
the user's field of view comprises a central region and a peripheral region;
said identifying comprises identifying those of the one or more of the luminaires (4a, 4b, 4c) which appear inside the central region, and/or which contribute to the light inside the central region; and
said control comprises, in response to the manual user input, controlling those of the luminaires identified as appearing inside the central region and/or contributing to the light inside the central region.

6. The controller of claim 4, wherein
the user's field of view comprises a central region and a peripheral region;
said identifying comprises identifying those of the one or more of the luminaires (4a, 4b, 4c) which appear in the peripheral region, and/or which contribute to the light in the peripheral region; and
said control comprises, in response to the manual user input, controlling those of the luminaires identified as appearing in the peripheral region and/or contributing to the light inside the peripheral region.

7. The controller of any of claims 2 to 6, wherein said control comprises adapting the control of those of the one or more identified luminaires in dependence on one or more of:
whether identified as directly appearing in the corneal image or contributing indirectly to the light forming the corneal image;
whether identified as appearing inside or outside the user's field of view;
whether identified as contributing to the light inside or outside the user's field of view;
whether identified as appearing in the central region or peripheral region of the user's field of view; and/or
whether identified as contributing to the light in the central region or peripheral region of the user's field of view.

8. The controller of any preceding claim, wherein the manual user input comprises one or more of:
an input entered via a user terminal, and/or
a bodily gesture performed by the user.

9. The controller of any preceding claim, wherein the controller is configured to identify each respective one of the one or more identified luminaires based on one or more of:
a coded light signal emitted by the respective luminaires,
a spectrum of the respective luminaires, and/or
a position of the respective luminaires as appearing in the corneal image.

10. The controller of any preceding claim, wherein said control comprises setting a light emission of the one or more identified luminaires to an updated setting, and the new setting is determined based on the manual user input.

11. The controller of any preceding claim, wherein said control comprises setting a light emission of the one or more identified luminaires to an updated setting, and the controller is configured to determine the updated setting automatically, but triggered in response to the manual user input.

12. The controller of claim 11, wherein said determination is based on a measure of contrast in the corneal image.

13. A method of controlling an arrangement of one or more luminaires which emit light for illuminating an environment (4a, 4b, 4c), the method comprising:
receiving an indication of a manual user input performed by a user (6);
receiving a corneal image, captured by a camera (10), formed by light reflected into the camera from at least a portion of at least one cornea (18) of the user;
identifying, based on the light from said luminaires, those of the one or more of the luminaires which either appear directly in the corneal image or indirectly contribute to the light forming the corneal image; and
controlling the illumination of the one or more identified luminaires in response to the manual user input.

14. A computer program product for controlling an arrangement of one or more luminaires which emit light for illuminating an environment (4a, 4b, 4c), the computer program product comprising code embodied one or more computer-readable storage media and configured so as when executed on one or more processors to perform operations of:
receiving an indication of a manual user input performed by a user (6);
receiving a corneal image, captured by a camera (10), formed by light reflected into the camera from at least a portion of at least one cornea (18) of the user;
identifying, based on the light from said luminaires, those of the one or more of the luminaires which either appear directly in the corneal image or indirectly contribute to the light forming the corneal image; and
controlling the illumination of the one or more identified luminaires in response to the manual user input.

## Patentansprüche

1. Steuerung (9) zum Steuern einer Anordnung eines oder mehrerer Beleuchtungskörper, die Licht zum Beleuchten einer Umgebung (4a, 4b, 4c) ausstrahlen, wobei die Steuerung konfiguriert ist, Betriebe auszuführen zum:
Empfangen einer Anzeige einer manuellen Benutzereingabe, die durch einen Benutzer (6) ausgeführt wird;
Empfangen eines Hornhautbilds, das von einer Kamera (10) aufgenommen wird, das durch Licht gebildet ist, das von mindestens einem Abschnitt mindestens einer Hornhaut (18) des Benutzers in die Kamera reflektiert wird;
Identifizieren, basierend auf dem Licht von den Beleuchtungskörpern, jener des einen oder der mehreren Beleuchtungskörper (4a, 4b, 4c), die entweder direkt im Hornhautbild erscheinen oder indirekt zum Licht, das das Hornhautbild bildet, beitragen; und
Steuern der Beleuchtung des einen oder der mehreren identifizierten Beleuchtungskörper in Antwort auf die manuelle Benutzereingabe.

2. Steuerung nach Anspruch 1, wobei:
das Identifizieren ein Identifizieren jener des einen oder der mehreren der Beleuchtungskörper (4a, 4b, 4c), die direkt im Hornhautbild erscheinen, umfasst; und
die Steuerung, in Antwort auf die manuelle Benutzereingabe, ein Steuern jener der Beleuchtungskörper umfasst, die als direkt im Hornhautbild erscheinend identifiziert sind.

3. Steuerung nach Anspruch 1 oder 2, wobei:
das Identifizieren ein Identifizieren jener des einen oder der mehreren der Beleuchtungskörper (4a, 4b, 4c) umfasst, die indirekt zu dem Licht, das das Hornhautbild bildet, beitragen; und
die Steuerung, in Antwort auf die manuelle Benutzereingabe, ein Steuern jener der Beleuchtungskörper umfasst, die als indirekt zum Licht beitragend identifiziert sind.

4. Steuerung nach einem der vorstehenden Ansprüche, wobei:
die Steuerung (9) konfiguriert ist, ein Blickfeld des Benutzers innerhalb des Hornhautbilds zu ermitteln;
das Identifizieren ein Identifizieren jener des einen oder der mehreren der Beleuchtungskörper (4a, 4b, 4c) umfasst, die innerhalb des Blickfelds des Benutzers erscheinen und/oder die zum Licht innerhalb des Blickfelds beitragen; und
die Steuerung, in Antwort auf die manuelle Benutzereingabe, ein Steuern jener der Beleuchtungskörper umfasst, die identifiziert sind, innerhalb des Blickfelds zu erscheinen und/oder zum Licht innerhalb des Blickfelds beizutragen.

5. Steuerung nach Anspruch 4, wobei:
das Blickfeld des Benutzers einen Mittelbereich und einen Randbereich umfasst;
das Identifizieren ein Identifizieren jener des einen oder der mehreren der Beleuchtungskörper (4a, 4b, 4c) umfasst, die innerhalb des Mittelbereichs erscheinen und/oder die zum Licht innerhalb des Mittelbereichs beitragen; und
die Steuerung, in Antwort auf die manuelle Benutzereingabe, ein Steuern jener der Beleuchtungskörper umfasst, die identifiziert sind, innerhalb des Mittelbereichs zu erscheinen und/oder zum Licht innerhalb des Mittelbereichs beizutragen.

6. Steuerung nach Anspruch 4, wobei
das Blickfeld des Benutzers einen Mittelbereich und einen Randbereich umfasst;
das Identifizieren ein Identifizieren jener des einen oder der mehreren der Beleuchtungskörper (4a, 4b, 4c) umfasst, die im Randbereich erscheinen und/oder die zum Licht im Randbereich beitragen; und
die Steuerung, in Antwort auf die manuelle Benutzereingabe, ein Steuern jener der Beleuchtungskörper umfasst, die identifiziert sind im Randbereich zu erscheinen und/oder zum Licht innerhalb des Randbereichs beizutragen.

7. Steuerung nach einem der Ansprüche 2 bis 6, wobei die Steuerung ein Anpassen der Steuerung des einen oder der mehreren identifizierten Beleuchtungskörper umfasst, abhängig von einem oder mehr von:
ob als direkt im Hornhautbild erscheinend oder indirekt zum Licht, das das Hornhautbild bildet, beitragend identifiziert;
ob als innerhalb oder außerhalb des Blickfelds des Benutzers erscheinend identifiziert;
ob als zum Licht innerhalb oder außerhalb des Blickfelds des Benutzers beitragend identifiziert;
ob als im Mittelbereich oder Randbereich des Blickfelds des Benutzers erscheinend identifiziert; und/oder
ob als zum Licht im Mittelbereich oder Randbereich des Blickfelds des Benutzers beitragend identifiziert.

8. Steuerung nach einem der vorstehenden Ansprüche, wobei die manuelle Benutzereingabe eines oder mehr umfasst von:
einer Eingabe, die über ein Benutzerendgerät eingegeben wird, und/oder
eine Körpergeste, die durch den Benutzer ausgeführt wird.

9. Steuerung nach einem der vorstehenden Ansprüche, wobei die Steuerung konfiguriert ist, jeden jeweiligen des einen oder der mehreren identifizierten Beleuchtungskörper, basierend auf einem oder mehr zu identifizieren, von:
einem codierten Lichtsignal, das durch die jeweiligen Beleuchtungskörper ausgestrahlt wird,
einem Spektrum der jeweiligen Beleuchtungskörper, und/oder
einer Position der jeweiligen Beleuchtungskörper, wie sie im Hornhautbild erscheinen.

10. Steuerung nach einem der vorstehenden Ansprüche, wobei die Steuerung ein Einstellen einer Lichtausstrahlung des einen oder der mehreren identifizierten Beleuchtungskörper auf eine aktualisierte Einstellung umfasst und die neue Einstellung basierend auf der manuellen Benutzereingabe ermittelt wird.

11. Steuerung nach einem der vorstehenden Ansprüche, wobei die Steuerung ein Einstellen einer Lichtausstrahlung des einen oder der mehreren identifizierten Beleuchtungskörper auf eine aktualisierte Einstellung umfasst und die Steuerung konfiguriert ist, die aktualisierte Einstellung automatisch, aber in Antwort auf die manuelle Benutzereingabe ausgelöst, zu ermitteln.

12. Steuerung nach Anspruch 11, wobei die Ermittlung auf einem Kontrastmaß im Hornhautbild basiert.

13. Verfahren zum Steuern einer Anordnung eines oder mehrerer Beleuchtungskörper, die Licht zum Beleuchten einer Umgebung (4a, 4b, 4c) ausstrahlen, das Verfahren umfassend:
Empfangen einer Anzeige einer manuellen Benutzereingabe, die durch einen Benutzer (6) ausgeführt wird;
Empfangen eines Hornhautbilds, das von einer Kamera (10) aufgenommen wird, das durch Licht gebildet ist, das von mindestens einem Abschnitt von mindestens einer Hornhaut (18) des Benutzers in die Kamera reflektiert wird;
Identifizieren, basierend auf dem Licht von den Beleuchtungskörpern, jener des einen oder der mehreren der Beleuchtungskörper, die entweder direkt im Hornhautbild erscheinen oder indirekt zu dem Licht, das das Hornhautbild bildet, beitragen; und
Steuern der Beleuchtung des einen oder der mehreren identifizierten Beleuchtungskörper in Antwort auf die manuelle Benutzereingabe.

14. Computerprogrammprodukt zum Steuern einer Anordnung eines oder mehrerer Beleuchtungskörper, die Licht zum Beleuchten einer Umgebung (4a, 4b, 4c) ausstrahlen, wobei das Computerprogrammprodukt einen Code umfasst, der in ein oder mehrere computerlesbare Speichermedien eingebettet und konfiguriert ist, wenn auf einem oder mehreren Prozessoren durchgeführt, Betriebe auszuführen zum:
Empfangen einer Anzeige einer manuellen Benutzereingabe, die durch einen Benutzer (6) ausgeführt wird;
Empfangen eines Hornhautbilds, das von einer Kamera (10) aufgenommen wird, das durch Licht gebildet ist, das von mindestens einem Abschnitt von mindestens einer Hornhaut (18) des Benutzers in die Kamera reflektiert wird;
Identifizieren, basierend auf dem Licht von den Beleuchtungskörpern, jener des einen oder der mehreren der Beleuchtungskörper, die entweder direkt im Hornhautbild erscheinen oder indirekt zu dem Licht, das das Hornhautbild bildet, beitragen; und
Steuern der Beleuchtung des einen oder der mehreren identifizierten Beleuchtungskörper in Antwort auf die manuelle Benutzereingabe.

## Revendications

1. Dispositif de commande (9) pour commander un agencement d'un ou plusieurs luminaires qui émettent de la lumière pour éclairer un environnement (4a, 4b, 4c), le dispositif de commande étant configuré pour effectuer des opérations consistant à :
recevoir une indication d'une entrée utilisateur manuelle effectuée par un utilisateur (6) ;
recevoir une image cornéenne capturée par une caméra (10) et formée par la lumière réfléchie par la caméra d'au moins une partie d'au moins une cornée (18) de l'utilisateur ;
identifier, sur la base de la lumière provenant desdits luminaires, ceux des un ou plusieurs luminaires (4a, 4b, 4c) qui apparaissent directement dans l'image cornéenne ou contribuent indirectement à la lumière formant l'image cornéenne ; et
commander l'éclairage des un ou plusieurs luminaires identifiés en réponse à l'entrée utilisateur manuelle.

2. Dispositif de commande selon la revendication 1, dans lequel :
ladite identification comprend l'identification de ceux des un ou plusieurs luminaires (4a, 4b, 4c) qui apparaissent directement dans l'image cornéenne ; et
ladite commande comprend, en réponse à l'entrée utilisateur manuelle, la commande de ceux des luminaires qui sont identifiés comme apparaissant directement dans ladite image cornéenne.

3. Dispositif de commande selon la revendication 1 ou 2, dans lequel :
ladite identification comprend l'identification de ceux des un ou plusieurs luminaires (4a, 4b, 4c) qui contribuent indirectement à la lumière formant l'image cornéenne ; et
ladite commande comprend, en réponse à l'entrée utilisateur manuelle, la commande de ceux des luminaires identifiés comme contribuant indirectement à ladite lumière.

4. Dispositif de commande selon l'une quelconque des revendications précédentes, dans lequel :
le dispositif de commande (9) est configuré pour déterminer un champ de vision de l'utilisateur dans l'image cornéenne ;
ladite identification comprend l'identification de ceux des un ou plusieurs luminaires (4a, 4b, 4c) qui apparaissent dans le champ de vision de l'utilisateur et/ou qui contribuent à la lumière dans le champ de vision ; et
ladite commande comprend, en réponse à l'entrée utilisateur manuelle, la commande de ceux des luminaires identifiés comme apparaissant dans le champ de vision et/ou qui contribuent à la lumière dans le champ de vision.

5. Dispositif de commande selon la revendication 4, dans lequel :
le champ de vision de l'utilisateur comprend une région centrale et une région périphérique ;
ladite identification comprend l'identification de ceux des un ou plusieurs luminaires (4a, 4b, 4c) qui apparaissent à l'intérieur de la région centrale et/ou qui contribuent à la lumière à l'intérieur de la région centrale ; et
ladite commande comprend, en réponse à l'entrée utilisateur manuelle, la commande de ceux des luminaires identifiés comme apparaissant à l'intérieur de la région centrale et/ou qui contribuent à la lumière à l'intérieur de la région centrale.

6. Dispositif de commande selon la revendication 4, dans lequel :
le champ de vision de l'utilisateur comprend une région centrale et une région périphérique ;
ladite identification comprend l'identification de ceux des un ou plusieurs luminaires (4a, 4b, 4c) qui apparaissent dans la région périphérique et/ou qui contribuent à la lumière dans la région périphérique ; et
ladite commande comprend, en réponse à l'entrée utilisateur manuelle, la commande de ceux des luminaires identifiés comme apparaissant dans la région périphérique et/ou contribuant à la lumière à l'intérieur de la région périphérique.

7. Dispositif de commande selon l'une quelconque des revendications 2 à 6, dans lequel ladite commande comprend l'adaptation de la commande de ceux des un ou plusieurs luminaires identifiés en fonction des une ou plusieurs situations suivantes :
s'ils sont identifiés comme apparaissant directement dans l'image cornéenne ou contribuant indirectement à la lumière formant l'image cornéenne ;
s'ils sont identifiés comme apparaissant à l'intérieur ou à l'extérieur du champ de vision de l'utilisateur ;
s'ils sont identifiés comme contribuant à la lumière à l'intérieur ou à l'extérieur du champ de vision de l'utilisateur ;
s'ils sont identifiés comme apparaissant dans la région centrale ou la région périphérique du champ de vision de l'utilisateur ; et/ou
s'ils sont identifiés comme contribuant à la lumière dans la région centrale ou la région périphérique du champ de vision de l'utilisateur.

8. Dispositif de commande selon l'une quelconque des revendications précédentes, dans lequel l'entrée utilisateur manuelle comprend une ou plusieurs des situations suivantes :
une entrée saisie via un terminal utilisateur et/ou
un geste corporel effectué par l'utilisateur.

9. Dispositif de commande selon l'une quelconque des revendications précédentes, dans lequel le dispositif de commande est configuré pour identifier chacun respectif des un ou plus luminaires identifiés sur la base d'une ou plusieurs des situations suivantes :
un signal de lumière codé émis par les luminaires respectifs,
un spectre des luminaires respectifs et/ou
une position des luminaires respectifs comme apparaissant dans l'image cornéenne.

10. Dispositif de commande selon l'une quelconque des revendications précédentes, dans lequel ladite commande comprend le réglage d'une émission de lumière des un ou plusieurs luminaires identifiés à un réglage mis à jour et le nouveau réglage est déterminé sur la base de l'entrée utilisateur manuelle.

11. Dispositif de commande selon l'une quelconque des revendications précédentes, dans lequel ladite commande comprend le réglage d'une émission de lumière des un ou plusieurs luminaires identifiés à un réglage mis à jour et le dispositif de commande est configuré pour déterminer le réglage mis à jour automatiquement, mais déclenché en réponse à l'entrée utilisateur manuelle.

12. Dispositif de commande selon la revendication 11, dans lequel ladite détermination est basée sur une mesure du contraste dans l'image cornéenne.

13. Procédé de commande d'un agencement d'un ou plusieurs luminaires qui émettent de la lumière pour éclairer un environnement (4a, 4b, 4c), le procédé comprenant :
la réception d'une indication d'une entrée utilisateur manuelle effectuée par un utilisateur (6) ;
la réception d'une image cornéenne capturée par une caméra (10), formée par la lumière réfléchie dans la caméra d'au moins une partie d'au moins une cornée (18) de l'utilisateur ;
l'identification, sur la base de la lumière issue desdits luminaires, de ceux des un ou plusieurs luminaires qui apparaissent directement dans l'image cornéenne ou contribuent indirectement à la lumière formant l'image cornéenne ; et
la commande de l'éclairage des un ou plusieurs luminaires identifiés en réponse à l'entrée utilisateur manuelle.

14. Produit de programme d'ordinateur pour commander un agencement d'un ou plusieurs luminaires qui émettent de la lumière pour éclairer un environnement (4a, 4b, 4c), le produit de programme d'ordinateur comprenant un code mis en oeuvre sur un ou plusieurs supports de stockage lisibles par ordinateur et configuré de manière à, lorsqu'il est exécuté sur un ou plusieurs processeurs, effectuer les opérations consistant à :
recevoir une indication d'une entrée utilisateur manuelle effectuée par un utilisateur (6) ;
recevoir une image cornéenne capturée par une caméra (10), formée par la lumière réfléchie dans la caméra d'au moins une partie d'au moins une cornée (18) de l'utilisateur ;
identifier, sur la base de la lumière issue desdits luminaires, ceux des un ou plusieurs luminaires qui apparaissent directement dans l'image cornéenne ou contribuent indirectement à la lumière formant l'image cornéenne ; et
commander l'éclairage des un ou plusieurs luminaires identifiés en réponse à l'entrée utilisateur manuelle.
